# EUROPEAN PATENT SPECIFICATION

(11) **EP 4 418 203 B1**
(45) Date of publication and mention of the grant of the patent: **14.10.2026**
(21) Application number: 21960618.3
(22) Date of filing: 13.10.2021
(51) Int. Cl.: G06T 7/00, G06T 7/593

(54) **REGION DETECTION PROGRAM, DEVICE, AND METHOD**
BEREICHSERKENNUNGSPROGRAMM, -VORRICHTUNG UND -VERFAHREN
PROGRAMME, DISPOSITIF ET PROCÉDÉ DE DÉTECTION DE RÉGION

(43) Date of publication of application: 21.08.2024
(73) Proprietor: FUJITSU LIMITED, Kawasaki-shi, Kanagawa 211-8588 (JP)
(72) Inventor: YANG, Fan, Kawasaki-shi, Kanagawa 211-8588 (JP); ODASHIMA, Shigeyuki, Kawasaki-shi, Kanagawa 211-8588 (JP)
(74) Representative: Hoffmann Eitle
(86) International application number: PCT/JP2021/037958
(87) International publication number: WO 2023/062760

(56) References cited:
- WO-A1-2021/100681
- JP-A- 2002 290 962
- JP-A- 2009 143 722
- JP-A- 2021 071 749
- US-A1- 2016 292 533

## Description

### TECHNICAL FIELD

The present technique relates to a region detection program, a region detection apparatus, and a region detection method.

### BACKGROUND ART

Conventionally, there is a technique for recognizing three dimensional information of a person, such as skeletal information of the person, from an image obtained by capturing the person, using a recognition model generated in advance by machine learning. In such a technique, a bounding box surrounding a region of the person to be recognized is detected.

For example, a 3D model generation apparatus that generates a 3D model of a subject from video captured by a plurality of cameras has been proposed. This apparatus acquires a silhouette image for each viewpoint from a multi-viewpoint video, and generates a low-resolution voxel model having a voxel size of a first size from a plurality of silhouette images by a view volume intersection method. Further, this apparatus classifies the low-resolution voxel model based on a feature thereof, and determines a second size smaller than the first size for each low-resolution voxel model based on a classification result. Further this apparatus generates a high-resolution voxel model having a voxel size of the second size for each 3D bounding box of the low-resolution voxel model, and outputs a 3DCG model of the subject based on the high-resolution voxel model.

There is also a technique for generating an image of an intermediate viewpoint by estimating corresponding points at another viewpoint from multi-viewpoint image captured from a plurality of viewpoints by using a perspective projection.

### PRIOR ART DOCUMENT

### Patent Document

[Patent Document 1] Japanese Laid-Open Patent Publication No. 2021-071749
WO 2021/100681 A1 relates to generating a three-dimensional model from images captured from multiple viewpoints.

### Non-Patent Document

[Non-Patent Document 1] Hideo Saito, Makoto Kimura, Satoshi Yaguchi, Naho Inamoto, "View Interpolation of Multiple Cameras Based on Projective Geometry", 2002.

### SUMMARY OF INVENTION

### TECHNICAL PROBLEM

When detecting the bounding box as a region indicating a target person from an image by using a machine learning model, a case occurs sometimes in which the bounding box may not be detected or may be erroneously detected. If such non-detection or erroneous detection of the bounding box occurs in any image of the multi-viewpoint image for acquiring the three dimensional information of the person, the three dimensional information may not be accurately acquired in the subsequent processes.

In addition, for example, in a case where a person who may take various postures such as a gymnast is set as a target, there is a case where it is not possible to appropriately interpolate the bounding box which is not detected or is erroneously detected by simply applying the perspective projection.

In one aspect, the disclosed technique aims to appropriately interpolate the bounding box which is not detected or is erroneously detected in the multi-viewpoint image.

### SOLUTION TO PROBLEM

The invention is set out in the appended set of claims.

### EFFECT OF INVENTION

As one aspect, there is an effect that it is possible to appropriately interpolate the bounding box that is not detected or is erroneously detected in the multi-viewpoint image.

### BRIEF DESCRIPTION OF DRAWINGS

FIG. 1 is a schematic diagram illustrating connection between a region detection apparatus and a camera;
FIG. 2 is a functional block diagram of the region detection apparatus;
FIG. 3 is a diagram for explaining a two dimensional bounding box;
FIG. 4 is a diagram for explaining a difference in width of the two dimensional bounding box depending on a viewpoint;
FIG. 5 is a diagram for explaining a specification of a person center line in a three dimension;
FIG. 6 is a diagram for explaining an interpolation of a two dimensional bounding box;
FIG. 7 is a diagram for explaining a width a height of a three dimensional bounding box;
FIG. 8 is a diagram for explaining statistical information about the three dimensional bounding box;
FIG. 9 is a block diagram illustrating a schematic configuration of a computer functioning as the region detection apparatus;
FIG. 10 is a flowchart illustrating an example of a region detection process;
FIG. 11 is a diagram illustrating an example of the interpolation of the two dimensional bounding box; and
FIG. 12 is a diagram for explaining an example of a technique to which a multi-viewpoint image in which the two dimensional bounding box is detected is applied.

### DESCRIPTION OF EMBODIMENTS

Hereinafter, an example of an embodiment according to the disclosed technique will be described with reference to the drawings. In the following embodiment, a case where a target person is a gymnast will be described, but the disclosed technique may be applied to various persons such as players of other sports or general pedestrians.

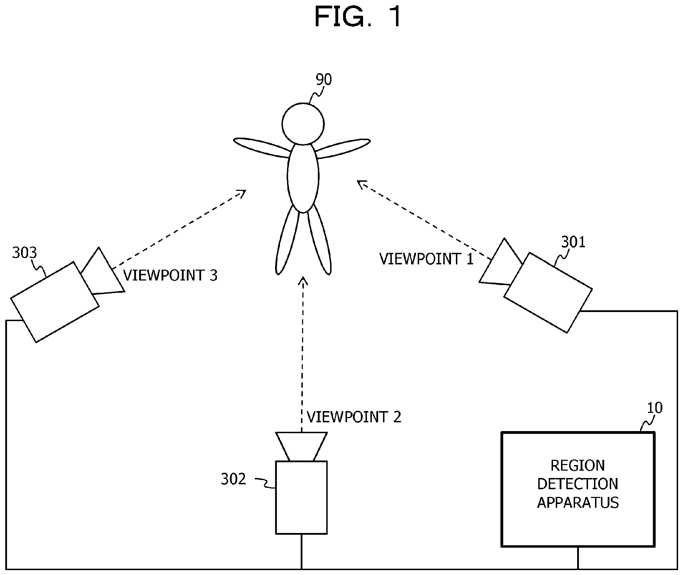

As illustrated in FIG. 1, the region detection apparatus 10 according to the present embodiment is coupled to each of a plurality of cameras 30n that capture images of a gymnast 90 at viewpoints n from respective different directions. In the example of FIG. 1, n = 1, 2, 3, and a camera 301 that captures an image from a viewpoint 1, a camera 302 that captures an image from a viewpoint 2, and a camera 303 that captures an image from a viewpoint 3 are coupled to the region detection apparatus 10. Note that a number of cameras 30n coupled to the region detection apparatus 10 is not limited to the example of FIG. 1.

The cameras 30n are installed at different positions in substantially the same horizontal plane at an angle at which the gymnast 90 is within an imaging range. For example, the cameras 30n are arranged horizontally side by side so as to surround the gymnast 90. Note that, here, " substantially in the same horizontal plane " means a case where a height of the camera 30n from a floor surface may be regarded as substantially the same, and a case where a difference in the height of the camera 30n from the floor surface is equal to or less than a predetermined value. A video captured by the camera 30n is sequentially input to the region detection apparatus 10. Note that time information is associated with each frame included in the video captured by each camera 30n, and the video captured by each camera 30n may be synchronized based on this time information.

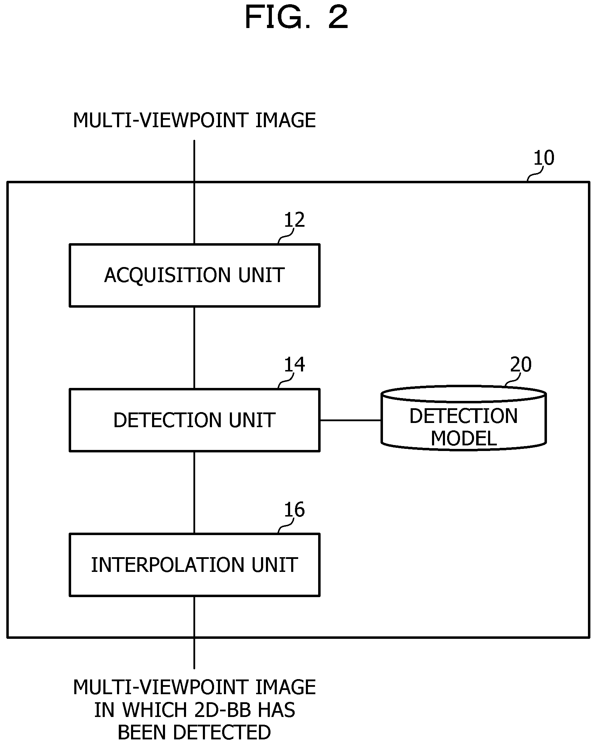

As illustrated in FIG. 2, the region detection apparatus 10 functionally includes an acquisition unit 12, a detection unit 14, and an interpolation unit 16. Further, a detection model 20 is stored in a predetermined storage area of the region detection apparatus 10.

The acquiring unit 12 acquires, as a multi-viewpoint image, a set of images indicated by the frame corresponding to the time information in the video input from the camera 30n to the region detection apparatus 10. Hereinafter, among images included in the multi-viewpoint image, an image captured by the camera 30n is referred to as an image 40n.

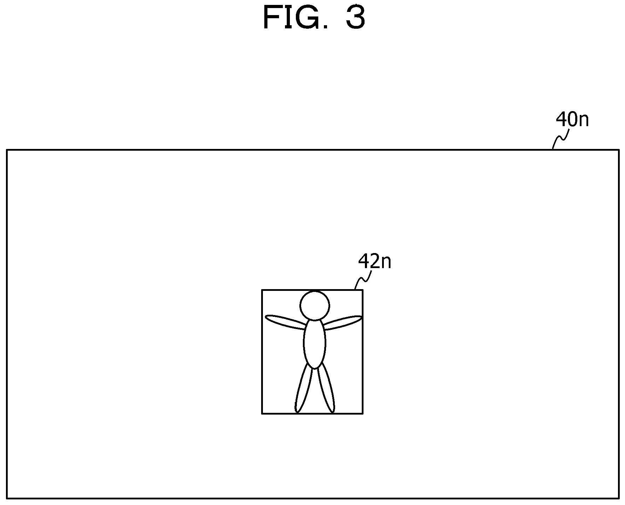

The detecting unit 14 inputs the image 40n included in the multi-viewpoint image obtained by the obtaining unit 12 to the detection model 20, and detects a two dimensional boundary box (hereinafter, also referred to as "2D-BB") as a region indicating a person from each image 40n. The detection model 20 is generated in advance by using, as training data, images in which the correct the 2D-BB is given to images in which gymnasts in various postures are captured. Note that the detection model 20 is an example of a "machine learning model" of the disclosed technology. For example, as illustrated in FIG. 3, the detection unit 14 detects a circumscribed rectangle of a region indicating the gymnast 90 in the image 40n as 2D-BB42n.

The interpolation unit 16 interpolates the 2D-BB42n in a second image of the multi-viewpoint image based on a parameter of each camera 30n and the 2D-BB42n detected from a first image of the multi-viewpoint image. In the present embodiment, it is assumed that 2D-BB42k is detected from the image 30k captured by the camera 40k of the viewpoint k, and 2D-BB42_miss is not detected from the image 40_miss captured by the camera 30_miss of the viewpoint_miss. In this case, the image 40k is an example of the first image, and the image 40_miss is an example of the second image.

Here, when the detection model 20 which is the machine learning model is used as described above, the 2D-BB42n may not be detected or may be erroneously detected from the image 40n. This may occur when a part of the gymnast 90 in the image 40n is blocked by an obstacle, when the posture of the gymnast 90 who is a target is not similar to any of gymnasts in the image used for training the detection model 20, or the like. It is considered that three dimensional information of the gymnast 90 is acquired based on an image in the 2D-BB42n detected from each image 40n included in the multi-viewpoint image and a recognition model for recognizing the three dimensional information such as skeleton information generated in advance by machine learning. In this case, if an image in which the 2D-BB42n is not detected or is erroneously detected is included in the multi-viewpoint image, a recognition accuracy of the three dimensional information is reduced. Therefore, it is desirable to interpolate a BB42n that is not detected or is erroneously detected.

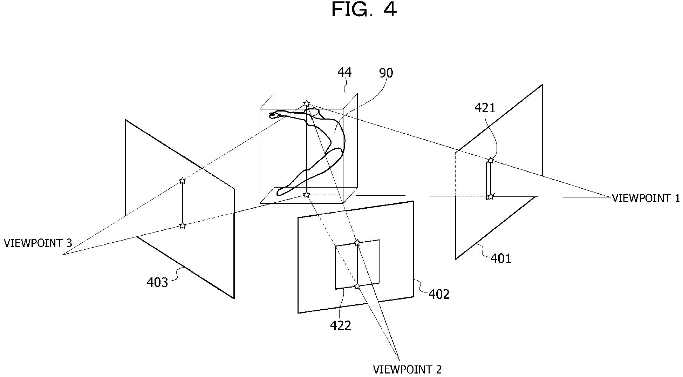

However, when a person who may take various postures, such as a gymnast, is a target, there is a case where it is not possible to appropriately interpolate the 2D-BB42n which is not detected or is erroneously detected by simply applying the perspective projection. This will be described in more detail with reference to FIG. 4. As illustrated in FIG. 4, a rectangular parallelepiped having horizontal and vertical surfaces and the smallest rectangular parallelepiped completely surrounding the gymnast 90 in a three dimensional space is assumed as a three dimensional bounding box (hereinafter, also referred to as "3D-BB") 44. At the viewpoint n of each camera 30n, the projection of 3D-BB44 onto each image 40n is the 2D-BB42n.

When the cameras 30n are arranged horizontally side by side so as to surround the gymnast 90, heights (vertical lengths) of the 2D-BB42n in each image 40n are the same regardless of the viewpoints of each camera 30n. Note that in FIG. 4, the heights of the 2D-BB42n and the heights of the 3D-BB44 are represented by lines coupling stars. On the other hand, widths (horizontal lengths) of the 2D-BB42n in each image 40n are different depending on the viewpoints of each camera 30n. In the example of FIG. 4, the width of the 2D-BB421 detected from an image 401 and the width of the 2D-BB422 detected from an image 402 are different due to the difference in the viewpoints. Therefore, for example, since the 2D-BB423 is not detected in an image 403, even if the perspective projection as in the related art is simply applied to interpolate from the detected the 2D-BB421 and the 2D-BB422, the widths of the 2D-BB423 may not be appropriately determined. Therefore, the 2D-BB423 in the image 403 cannot be interpolated.

Therefore, the interpolation unit 16 specifies the height of the 2D-BB42_miss in the image 40_miss in which the 2D-BB is not detected based on the height of 2D-BB42k in the image 40k in which the 2D-BB is detected and each parameter of the camera 30k. Then, the interpolation unit 16 estimates the width of the 2D-BB42_miss in the image 40_miss in which the 2D-BB is not detected, based on statistical information on the posture of the gymnast 90 and the parameter of the camera 30_miss.

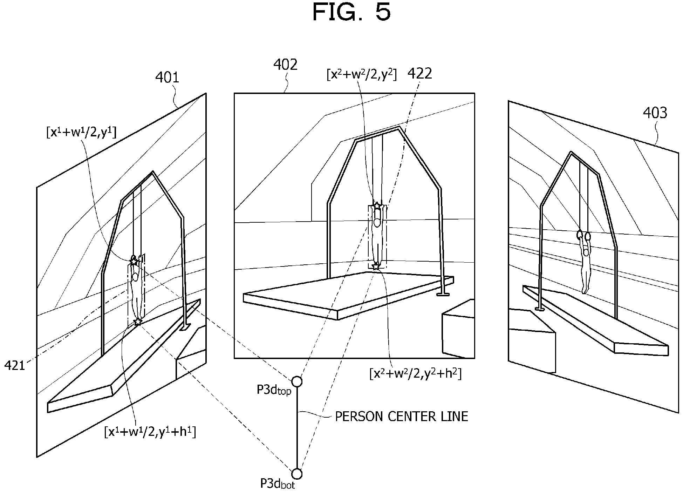

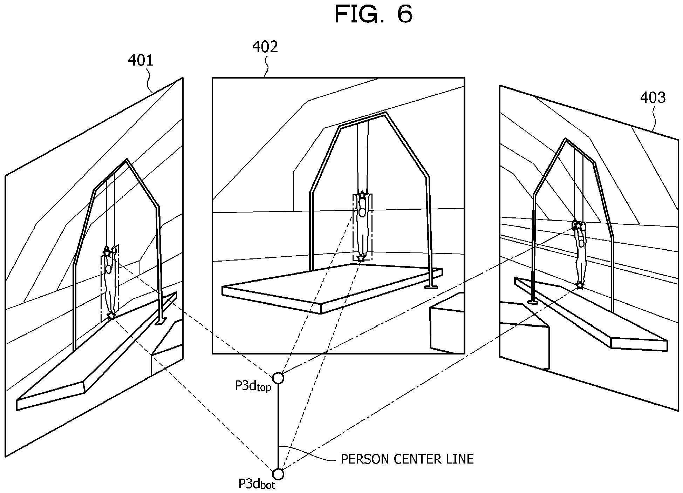

The description will be made in detail with reference to FIGS. 5 and 6. The interpolation unit 16 sets 2D-BB42k detected from the image 40k as B^{k} = [x^{k}, y^{k}, w^{k}, h^{k}]. x^{k} and y^{k} are coordinates in the image 40k of a point at the upper left corner of 2D-BB42k, and w and h are the width and height of 2D-BB42k, respectively. Further, the interpolation unit 16 also sets the 2DandBB42_miss in the image 40_miss to B^{miss} = [x^{miss}, y^{miss}, w^{miss}, h^{miss}]. For example, identifying the B^{miss} corresponds to interpolating the 2D-BB42_miss. Note that, in the examples of FIGS. 5 and 6, "k = 1, 2,"is established and "_miss = 3" is established.

The interpolation unit 16 specifies a coordinate [x^{k}+w^{k}/2, y^{k}] of an upper end point of a vertical center line of 2D-BB42k and a coordinate [x^{k}+w^{k}/2, y^{k}+h^{k}] of a lower end point. Then, the interpolation unit 16 converts the coordinates of the upper end point and the lower end point into three dimensional coordinates by using the parameter of the camera 30k for converting the three dimensional coordinates into coordinates on an image plane captured by the camera 30k. For example, the interpolator 16 may convert the coordinates using cv::sfm::trianglePoints defined in OpenCV (https://docs.opencv.org/3.4/d0/dbd/group__triangulation.html). In this case, the interpolation unit 16 calculates the three dimensional coordinates of points P3dₜₒₚ and P3d_{bot} in the three dimensional space corresponding to the upper end point and the lower end point, respectively, as illustrated in the following Equations (1) and (2) using a parameter matrix ProjMat_{cam_k} of the camera 30k. Note that a line coupling P3dₜₒₚ and the P3d_{bot} in the three dimensional space is referred to as a person center line.
$\begin{matrix}{P 3 d}_{top} = \left[{X}_{top}, {Y}_{top}, {Z}_{top}\right] \\ = cv : : sfm : : trianglePoints \left(\left\{\begin{matrix}\left[{x}^{1}+{w}^{1}/2, {y}^{1}\right] , \left[{x}^{2}+{w}^{2}/2, {y}^{2}\right] , … , \\ \left[{x}^{k}+{w}^{k}/2, {y}^{k}\right]\end{matrix}\right\}, \left\{{ProjMat}_{cam_ 1}, {ProjMat}_{cam_ 2},…, {ProjMat}_{cam_k}\right\}\right)\end{matrix}$ (1) $\begin{matrix}P 3 {d}_{bot} = \left[{X}_{bot}, {Y}_{bot}, {Z}_{bot}\right] \\ = cv : : sfm : : trianglePoints \left(\left\{\begin{matrix}\left[{x}^{1}+{w}^{1}/2, {y}^{1}+{h}^{1}\right] , \left[{x}^{2}+{w}^{2}/2, {y}^{2}+{h}^{2}\right] , … , \\ \left[{x}^{k}+{w}^{k}/2, {y}^{k}+{h}^{k}\right]\end{matrix}\right\}, \left\{{ProjMat}_{cam _ 1}, {ProjMat}_{cam _ 2},…, {ProjMat}_{cam _ k}\right\}\right)\end{matrix}$ (2)

Further, the interpolation unit 16 converts the three dimensional coordinates of the P3dₜₒₚ and P3d_{bot} into coordinates on the image 40_miss based on the parameter of the camera 30_miss, as illustrated in FIG. 6. Thus, the interpolation unit 16 calculates the coordinates of an upper end point and a lower end point of a vertical center line between the 2D-BB42_miss. For example, the interpolation unit 16 performs a coordinate conversion as illustrated in the following Equations (3) and (4) using a parameter matrix ProjMat_{cam_miss} of the camera 30_miss and a parameter s representing a scale ratio between the three dimensional coordinates and a size of the image 40.
$\begin{matrix}\left[s\times \left({x}^{miss}+{w}^{miss}/2\right), s\times {y}^{miss}, s\right] \\ = {ProjMat}_{cam_miss} \times \left[{X}_{top}, {Y}_{top}, {Z}_{top}, 1\right]\end{matrix}$ (3) $\begin{matrix}\left[s\times \left({x}^{miss}+{w}^{miss}/2\right), s\times \left({y}^{miss}+{h}^{miss}, s\right.\right] \\ = {ProjMat}_{cam_miss} \times \left[{X}_{bot}, {Y}_{bot}, {Z}_{bot}, 1\right]\end{matrix}$ (4)

The interpolation unit 16 calculates y^{miss}, h^{miss}, and x^{miss}+w^{miss}/2 for specifying the coordinates of the upper end point and the lower end point of the vertical center line of 2D-BB42_miss based on the above-described coordinate conversion as illustrated in the following Equations (5) to (7).
${y}^{miss} = s \times {y}^{miss} / s$ (5) ${h}^{miss} = s \times \left({y}^{miss}+{h}^{miss}\right) / s - {y}^{miss}$ (6) ${x}^{miss} + {w}^{miss} / 2 = s \times \left({x}^{miss}+{w}^{miss}/2\right) / s$ (7)

The interpolation unit 16 specifies a line coupling the specified upper end point and the specified lower end point as the vertical center line of the 2D-BB42_miss, and specifies a length of the vertical center line as the height of the 2D-BB42_miss.

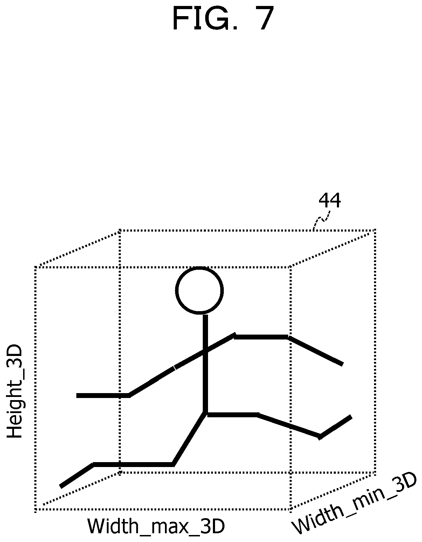

Further, the interpolation unit 16 estimates the width of the 2D-BB42_miss based on the specified height of the 2D-BB42_miss and the statistical information related to the posture of the gymnast 90. The statistical information may be, for example, a mean of a sum of the height and the width of the 3D-BB44 surrounding the gymnast in each of the cases where the gymnast takes a plurality of different postures. In the following description, as illustrated in FIG. 7, the height of the 3D-BB44 is represented by Height_3D, the larger one of the widths is represented by Width_max_3D, and the smaller one is represented by Width_min_3D.

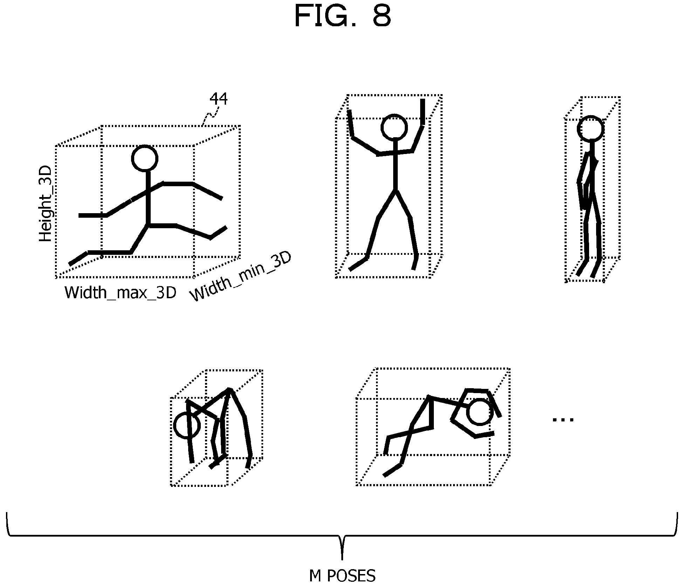

The statistical information will be described in more detail. First, as illustrated in FIG. 8, a three dimensional model of a full-size gymnast are prepared for a plurality of postures (poses), which are acquired from a motion capture, a manual annotation, published data, and the like. In the example of FIG. 8, three dimensional models for M poses are prepared. Then, the 3D-BB44 is specified for each three dimensional model, each of the Height_3D, the Width_max_3D, and the Width_min_3D is calculated, and a mean Mean_3D illustrated in the following Equation (8) is calculated as the statistical information.
$Mean_ 3 D = \left(1/M\right) {Σ}_{M} \left(\left(Width_max_3D+Width_min_3D\right)/2+Height_3D\right)$ (8)

The interpolation unit 16 calculates Width_3D of the 3D-BB44 of the gymnast 90 who is the target as illustrated in the following Equation (9) using the above-described statistical information Mean_3D and the Zₜₒₚ and Z_{bot} which have been already calculated. $Width_ 3 D = Mean_ 3 D - \left‖{Z}_{top}-{Z}_{bot}\right‖$ (9)

When perspectively projecting the 3D-BB onto the image, a ratio of the height and the width of the projected the 2D-BB is similar to a ratio of the height and the width of the 3D-BB before the projecting. Therefore, the interpolation unit 16 calculates the width w^{miss} of the 2D-BB42_miss as illustrated in the following Equation (10) using the calculated Width_3D and the already-calculated Zₜₒₚ, Z_{bot}, and h^{miss}. Further, the interpolation unit 16 calculates the x^{miss} by the calculated w^{miss} and Equation (7) as illustrated in Equation (11) below. ${w}^{miss} = \left(Width_3D/\left‖{Z}_{top}-{Z}_{bot}\right‖\right) \times {h}^{miss}$ (10) ${x}^{miss} = {x}^{miss} + {w}^{miss} / 2 - {w}^{miss} / 2$ (11)

The interpolation unit 16 interpolates the 2D-BB42_miss specified by [x^{miss}, y^{miss}, w^{miss}, h^{miss}] calculated by Equations (5), (6), (10), and (11) in the image 40_miss. Then, the interpolation unit 16 outputs the interpolated 2D-BB42_miss and 2D-BB42k together as a multi-viewpoint image in which the 2D-BB has been detected.

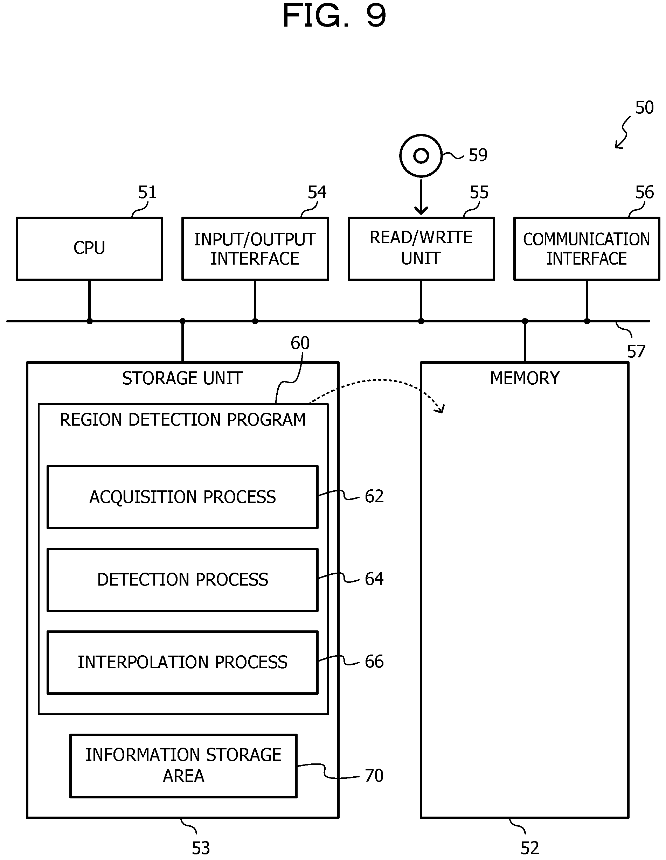

The region detection apparatus 10 may be implemented by, for example, a computer 50 illustrated in FIG. 9. The computer 50 includes a central processing unit (CPU) 51, a memory 52 as a temporary storage area, and a nonvolatile storage unit 53. The computer 50 further includes an input/output interface (I/F) 54 to which external devices such as a camera 30n, an input device, and a display are coupled, and a read/write (R/W) unit 55 that controls reading and writing of data from and to a storage media 59. Further, the computer 50 includes a communication I/F 56 coupled to a network such as a Internet. The CPU 51, the memory 52, the storage unit 53, the input/output I/F 54, the R/W unit 55, and the communication I/F 56 are coupled to each other via a bus 57.

The storage unit 53 may be realized by a hard disk drive (HDD), a solid state drive (SSD), a flash memory, or the like. The storage unit 53 as a storage medium stores an area detection program 60 for causing the computer 50 to function as the area detection apparatus 10. The region detection program 60 includes an acquisition process 62, a detection process 64, and an interpolation process 66. Further, he storage unit 53 includes an information storage area 70 in which information constituting the detection model 20 is stored.

The CPU 51 reads the region detection program 60 from the storage unit 53, develops the region detection program 60 in the memory 52, and sequentially executes processes included in the region detection program 60. The CPU 51 operates as the acquisition unit 12 illustrated in FIG. 2 by executing the acquisition process 62. Further, the CPU 51 operates as the detection unit 14 illustrated in FIG. 2 by executing the detection process 64. Further, the CPU 51 operates as the interpolation unit 16 illustrated in FIG. 2 by executing the interpolation process 66. Further, the CPU 51 reads information from the information storage area 70 and develops the detection model 20 in the memory 52. Thus, the computer 50 that executes the region detection program 60 functions as the region detection apparatus 10. Note that the CPU 51 that executes the program is hardware.

Note that functions implemented by the region detection program 60 may be implemented by, for example, a semiconductor integrated circuit, for example, a graphics processing unit (GPU), an application specific integrated circuit (ASIC), or the like.

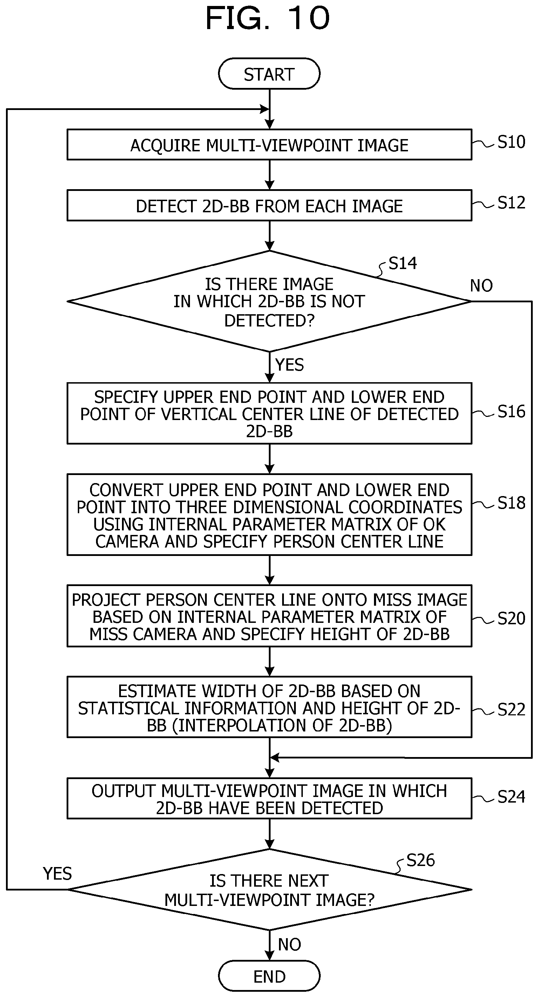

Next, an operation of the region detection apparatus 10 according to the present embodiment will be described. When a multi-viewpoint image is input from the camera 30n to the region detection apparatus 10, the region detection apparatus 10 performs a region detection process illustrated in FIG. 10. Note that the region detection process is an example of a region detection method of the disclosed technique.

In step S10, the acquisition unit 12 acquires a multi-viewpoint image input to the region detection apparatus 10. Next, in step S12, the detection unit 14 inputs each image 40n included in the acquired multi-viewpoint image to the detection model 20, and detects the 2D-BB42n from each image 40n. Next, in step S14, the detection unit 14 determines whether or not there is an image 40n in which the 2D-BB42n is not detected among the images 40n included in the multi-viewpoint image. If there is an image 40n in which the 2D-BB42n are not detected, the process proceeds to step S16, and if there is no image 40n in which the 2D-BB42n is not detected, the process proceeds to step S24.

In step S16, the interpolation unit 16 specifies the coordinate [x^{k}+w^{k}/2, y^{k}] of the upper end point of the vertical center line of the detected 2D-BB42k and the coordinate [x^{k}+w^{k}/2, y^{k}+h^{k}] of the lower end point of the vertical center line. Next, in step S18, the interpolation unit 16 specifies the points P3dₜₒₚ and P3d_{bot} obtained by converting the coordinates of the upper end point and the lower end point into the three dimensional coordinates using the parameter matrix of the camera 30k (denoted as "OK camera" in FIG. 10). Then, the interpolation unit 16 specifies the line coupling the P3dₜₒₚ and the P3d_{bot} as the person center line.

Next, in step S20, the interpolation unit 16 projects the three dimensional coordinates of the P3dₜₒₚ and P3d_{bot} onto the image 40_miss (denoted as "miss image" in FIG. 10) based on the parameter matrix of the camera 30_miss (denoted as "miss camera" in FIG. 10). Thus, the vertical center line of the 2D-BB42_miss is specified, and the length of the vertical center line is specified as the height of the 2D-BB42_miss.

Next, in step S22, the interpolation unit 16 estimates the width of the 2D-BB42_miss based on the specified height of the 2D-BB42_miss and the statistical information about the posture of the gymnast 90. Thus, the 2D-BB42_miss specified by the vertical center line and the height of the 2D-BB42_miss which are specified in step S20 and the width of the 2D-BB42_miss which is estimated in this step are interpolated in the image 40_miss.

Next, in step S24, the interpolation unit 16 outputs a multi-viewpoint image in which the 2D-BB42n is detected from each image 40n. The detected 2D-BB42n includes the 2D-BB interpolated in the above step S22. Next, in step S26, the acquisition unit 12 determines whether or not a next multi-viewpoint image is input to the region detection apparatus 10. When the next multi-viewpoint image is input to the region detection apparatus 10, the process returns to step S10, and when the next multi-viewpoint image is not input, the region detection process is terminated.

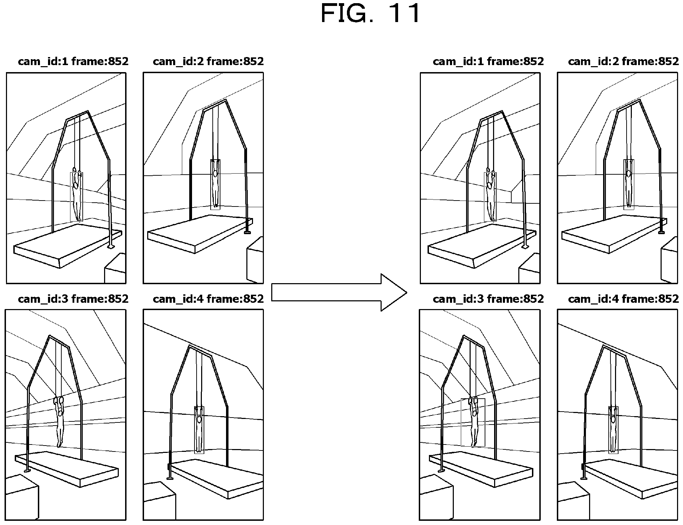

FIG. 11 illustrates an example of an interpolation of the 2D-BB that has not been detected in a multi-viewpoint image including four images. In FIG. 11, cam_id:n (n=1,2,3,4) represents an image captured by a camera having an id of n. Further, frame:852 is a frame number associated with each image, and corresponds to the time information in the above-described embodiment. 2D_BB that is missing in cam_id:3 included in the multi-viewpoint image of a frame number 852 as illustrated in the left diagram of FIG. 11 is interpolated as illustrated in the right diagram of FIG. 11 by applying the present embodiment.

As described above, the region detection apparatus according to the present embodiment acquires a multi-viewpoint image that is a set of images captured by a plurality of cameras that capture a person from each different direction. The region detection apparatus inputs each of the images included in the acquired multi-viewpoint image to a detection model generated in advance by machine learning so as to detect a bounding box indicating a region of the person included in the image, and detects the bounding box from each of the images. Then, the region detection apparatus interpolates, based on the bounding box detected from a first image among the acquired images and the parameter of each of the plurality of cameras, the bounding box in a second image among the acquired images.

For example, the region detection apparatus projects the detected 2D-BB from a two dimension to a three dimension using internal and external parameters of the camera, and determines a vertical person center line in the three dimensional space. Further, the region detection apparatus estimates a width of the 3D-BB based on statistical information indicating a mean of the height and width of the 3D-BB and the height of the 3D-BB which is the length of the person center line, which are calculated in advance from the three dimensional model of gymnasts in various postures. Further, the region detection apparatus interpolates the 2D-BB in the image by projecting the 3D_BB specified from the person center line and the height and width of the 3D-BB from the three dimension to the two dimension using the internal and external parameters of the camera. Thus, the undetected bounding box in the multi-viewpoint image may be appropriately interpolated.

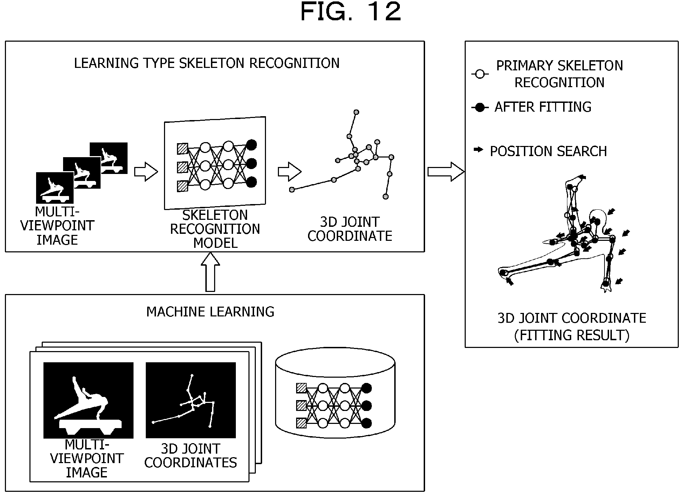

The multi-viewpoint image in which the 2D-BB have been detected, which is output from the region detection apparatus according to the present embodiment, is used for a learning type skeleton recognition of a gymnast or the like, for example, as illustrated in FIG. 12. In the example of FIG. 12, a skeleton recognition model is generated in advance by machine learning using, as training data, a pair of a multi-viewpoint image in which the 2D-BB is known and a correct answer of a three dimensional coordinate of each joint of a gymnasts represented by the multi-view image (hereinafter, referred to as "3D joint coordinate"). The skeleton recognition model is, for example, a neural network. Then, when the multi-viewpoint image in which the 2D-BB have been detected, which is output from the region detection apparatus according to the present embodiment, is acquired as a multi-viewpoint image of a gymnast to be recognized, the multi-viewpoint image is input to the skeleton recognition model that has been subjected to machine learning, and the 3D joint coordinate is output. Then, the 3D joint coordinate output from the skeleton recognition model is used as a primary skeleton recognition result, and the 3D joint coordinate in which a position search of each joint position is performed based on a constraint such as a length and a positional relationship between the respective joints is output as a fitting result.

Further, in the above embodiment, the case where the plurality of cameras are arranged in substantially the same horizontal plane has been described, but the present disclosure is not limited thereto. For example, depending on a game played by a player, a multi-viewpoint image captured by a plurality of cameras which are arranged in substantially the same vertical plane may provide a more accurate recognition result in the skeleton recognition or the like. In this case, the width of the 3D-BB may be specified based on the width of the 2D-BB detected from the first image and the parameter of the camera that has captured the first image, and the height of the 3D-BB may be estimated based on the width of the 3D-BB and the statistical information related to the three dimensional model of the gymnast.

Further, in the above-described embodiment, the case where the first image is an image in which the 2D-BB is detected and the second image is an image in which 2D-BB is not detected, for example, the case where the 2D-BB is interpolated in an image in which the 2D-BB is missing has been described, but the present disclosure is not limited thereto. For example, each image included in the multi-viewpoint image may be set as the first image, the other images may be set as the second images, and the 2D-BB detected in the first image may be corrected based on the 2D-BB interpolated in the same manner as in the above-described embodiment. In addition, in a case where the detection model outputs, together with a detection of the bounding box, reliability of the detection and the reliability of the detection is equal to or less than a predetermined value, the case may be handled in the same manner as in the case where the 2D-BB is not detected in the above-described embodiment.

Further, in the above-described embodiment, the region detection program is stored (installed) in the storage unit in advance, but the present disclosure is not limited thereto. The program according to the disclosed technique may be provided in a form stored in a storage medium such as a CD-ROM, a DVD-ROM, or a USB memory.

### DESCRIPTION OF SYMBOLS

10 Region detection apparatus
12 Acquisition unit
14 Detection unit
16 Interpolation unit
20 Detection model
301, 302, 303 Camera
401, 402, 403 Image
421, 422 2D-BB
50 Computer
51 CPU
52 Memory
53 Storage unit
59 Storage medium
60 Region detection program

## Claims

1. A region detection program for causing a computer to execute a process comprising:
acquiring images each which is captured by each of a plurality of imaging apparatuses (30n) that capture the respective images of a person from respective different directions, the plurality of imaging apparatuses being arranged in a same horizontal plane;
detecting a bounding box as a region indicating the person from each of the images by inputting the images to a machine learning model which is generated in advance by a machine learning so as to detect the region indicating the person; and
interpolating, based on a first bounding box of the person which is detected from a first image of the images and a parameter matrix of each of the plurality of imaging apparatuses a second bounding box indicating the person in a second image of the images, the second image being an image in which the region indicating the person is not detected by the machine learning model,
**characterized in that** the interpolating comprises:
estimating a height of the second bounding box by converting end points of a vertical center line of the first bounding box into coordinates of end points of a vertical center line of the person in a three dimensional space based on the parameter matrix of an imaging apparatus which captures the first image, and converting the coordinates into coordinates in the second image based on the parameter matrix of an imaging apparatus which captures the second image; and
estimating a width of the second bounding box based on the height of the first bounding box, the estimated height of the second bounding box, and statistical information regarding a posture of the person, wherein the statistical information is a mean of a sum of a height and a width of a rectangular parallelepiped surrounding the person in each of a plurality of different postures of the person.

2. The region detection program according to claim 1, wherein
the height of the second bounding box is estimated by converting an end point of a vertical center line of the first bounding box into a coordinate of an end point of a vertical center line of the person in a three dimensional space based on the parameter matrix of an imaging apparatus which captures the first image and converting the coordinate into a coordinate in the second image based on the parameter matrix of an imaging apparatus which captures the second image.

3. The region detection program according to claim 2, wherein
the statistical information regarding the posture of the person is a mean of a sum of a height and a width of a rectangular parallelepiped surrounding the person in each of a plurality of different postures of the person

4. The region detection program according to claim 3, wherein
a length of the vertical center line of the person in the three dimensional space is set as a height of the person in the three dimensional space, a difference between the mean indicated by the statistical information and the height of the person in the three dimensional space is estimated as a width of the person in the three dimensional space and the width of the second bounding box is estimated based on a ratio of the height and the width of the person in the three dimensional space and the height of the second bounding box.

5. The region detection program according to claim 1, wherein
the plurality of imaging apparatuses are arranged in a same vertical plane, and
a height of the second bounding box is estimated based on a width of the first bounding box, a width of the second bounding box, and statistical information regarding a posture of the person.

6. A region detection apparatus comprising:
an acquisition unit (12) configured to acquire images each which is captured by each of a plurality of imaging apparatuses (30n)that capture the respective images of a person from respective different directions the plurality of imaging apparatuses being arranged in a same horizontal plane;
a detection unit (14) configured to detect a bounding box as a region indicating the person from each of the images by inputting the images to a machine learning model which is generated in advance by a machine learning so as to detect the region indicating the person; and
an interpolation unit (16) configured to interpolate, based on a first bounding box of the person which is detected from a first image of the images and a parameter matrix of each of the plurality of imaging apparatuses a second bounding box indicating the person in a second image of the images, the second image being an image in which the region indicating the person is not detected by the machine learning model,
**characterized in that** the interpolating comprises:
estimating a height of the second bounding box by converting end points of a vertical center line of the first bounding box into coordinates of end points of a vertical center line of the person in a three dimensional space based on the parameter matrix of an imaging apparatus which captures the first image, and converting the coordinates into coordinates in the second image based on the parameter matrix of an imaging apparatus which captures the second image; and
estimating a width of the second bounding box based on the height of the first bounding box, the estimated height of the second bounding box, and statistical information regarding a posture of the person, wherein the statistical information is a mean of a sum of a height and a width of a rectangular parallelepiped surrounding the person in each of a plurality of different postures of the person.

7. The region detection apparatus according to claim 6, wherein
the height of the second bounding box is estimated by converting an end point of a vertical center line of the first bounding box into a coordinate of an end point of a vertical center line of the person in a three dimensional space based on the parameter matrix of an imaging apparatus which captures the first image and converting the coordinate into a coordinate in the second image based on the parameter matrix of an imaging apparatus which captures the second image.

8. The region detection apparatus according to claim 7, wherein
the statistical information regarding the posture of the person is a mean of a sum of a height and a width of a rectangular parallelepiped surrounding the person in each of a plurality of different postures of the person.

9. The region detection apparatus according to claim 8, wherein
a length of the vertical center line of the person in the three dimensional space is set as a height of the person in the three dimensional space, a difference between the mean indicated by the statistical information and the height of the person in the three dimensional space is estimated as a width of the person in the three dimensional space and the width of the second bounding box is estimated based on a ratio of the height and the width of the person in the three dimensional space and the height of the second bounding box.

10. The region detection apparatus according to claim 6, wherein
the plurality of imaging apparatuses are arranged in a same vertical plane, and
a height of the second bounding box is estimated based on a width of the first bounding box, a width of the second bounding box, and statistical information regarding a posture of the person.

11. A region detection method for executing a process comprising:
acquiring images each which is captured by each of a plurality of imaging apparatuses (30n)that capture the respective images of a person from respective different directions the plurality of imaging apparatuses being arranged in a same horizontal plane;
detecting a bounding box as a region indicating the person from each of the images by inputting the images to a machine learning model which is generated in advance by a machine learning so as to detect the region indicating the person; and
interpolating, based on a first bounding box of the person which is detected from a first image of the images and a parameter matrix of each of the plurality of imaging apparatuses a second bounding box indicating the person in a second image of the images, the second image being an image in which the region indicating the person is not detected by the machine learning model,
**characterized in that** the interpolating comprises:
estimating a height of the second bounding box by converting end points of a vertical center line of the first bounding box into coordinates of end points of a vertical center line of the person in a three dimensional space based on the parameter matrix of an imaging apparatus which captures the first image, and converting the coordinates into coordinates in the second image based on the parameter matrix of an imaging apparatus which captures the second image; and
estimating a width of the second bounding box based on the height of the first bounding box, the estimated height of the second bounding box, and statistical information regarding a posture of the person, wherein the statistical information is a mean of a sum of a height and a width of a rectangular parallelepiped surrounding the person in each of a plurality of different postures of the person.

## Patentansprüche

1. Bereichserkennungsprogramm zum Veranlassen eines Computers, einen Prozess auszuführen, umfassend:
Erfassen von Bildern, von denen jedes durch jede von einer Vielzahl von Bildaufnahmevorrichtungen (30n) aufgenommen wird, die die jeweiligen Bilder einer Person aus jeweiligen verschiedenen Richtungen aufnehmen, wobei die Vielzahl von Bildaufnahmevorrichtungen in derselben horizontalen Ebene angeordnet ist;
Detektieren einer Bounding-Box als einen Bereich, der die Person anzeigt, aus jedem der Bilder durch Eingeben der Bilder in ein Machine-Learning-Modell, das im Voraus durch maschinelles Lernen erzeugt wird, um den Bereich, der die Person anzeigt, zu detektieren; und
Interpolieren, basierend auf einer ersten Bounding-Box der Person, die aus einem ersten Bild der Bilder detektiert wird, und einer Parametermatrix jeder der Vielzahl von Bildaufnahmevorrichtungen, einer zweiten Bounding-Box, die die Person in einem zweiten Bild der Bilder anzeigt, wobei das zweite Bild ein Bild ist, in dem der Bereich, der die Person anzeigt, durch das Machine-Learning-Modell nicht detektiert wird,
**dadurch gekennzeichnet, dass**
das Interpolieren umfasst:
Schätzen einer Höhe der zweiten Bounding-Box durch Umwandeln von Endpunkten einer vertikalen Mittellinie der ersten Bounding-Box in Koordinaten von Endpunkten einer vertikalen Mittellinie der Person in einem dreidimensionalen Raum basierend auf der Parametermatrix einer Bildaufnahmevorrichtung, die das erste Bild aufnimmt, und Umwandeln der Koordinaten in Koordinaten in dem zweiten Bild basierend auf der Parametermatrix einer Bildaufnahmevorrichtung, die das zweite Bild aufnimmt; und
Schätzen einer Breite der zweiten Bounding-Box basierend auf der Höhe der ersten Bounding-Box, der geschätzten Höhe der zweiten Bounding-Box und statistischer Information bezüglich einer Körperhaltung der Person, wobei die statistische Information ein Mittelwert einer Summe einer Höhe und einer Breite eines die Person umgebenden Quaders in jeder von einer Vielzahl von verschiedenen Körperhaltungen der Person ist.

2. Bereichserkennungsprogramm nach Anspruch 1,
wobei
die Höhe der zweiten Bounding-Box geschätzt wird durch Umwandeln eines Endpunkts einer vertikalen Mittellinie der ersten Bounding-Box in eine Koordinate eines Endpunkts einer vertikalen Mittellinie der Person in einem dreidimensionalen Raum basierend auf der Parametermatrix einer Bildaufnahmevorrichtung, die das erste Bild aufnimmt, und Umwandeln der Koordinate in eine Koordinate in dem zweiten Bild basierend auf der Parametermatrix einer Bildaufnahmevorrichtung, die das zweite Bild aufnimmt.

3. Bereichserkennungsprogramm nach Anspruch 2,
wobei
die statistische Information bezüglich der Körperhaltung der Person ein Mittelwert einer Summe einer Höhe und einer Breite eines die Person umgebenden Quaders in jeder von einer Vielzahl von verschiedenen Körperhaltungen der Person ist

4. Bereichserkennungsprogramm nach Anspruch 3,
wobei
eine Länge der vertikalen Mittellinie der Person in dem dreidimensionalen Raum als eine Höhe der Person in dem dreidimensionalen Raum festgelegt wird, eine Differenz zwischen dem durch die statistische Information angegebenen Mittelwert und der Höhe der Person in dem dreidimensionalen Raum als eine Breite der Person in dem dreidimensionalen Raum geschätzt wird und die Breite der zweiten Bounding-Box basierend auf einem Verhältnis der Höhe und der Breite der Person in dem dreidimensionalen Raum und der Höhe der zweiten Bounding-Box geschätzt wird.

5. Bereichserkennungsprogramm nach Anspruch 1,
wobei
die Vielzahl von Bildaufnahmevorrichtungen in derselben vertikalen Ebene angeordnet ist, und
eine Höhe der zweiten Bounding-Box basierend auf einer Breite der ersten Bounding-Box, einer Breite der zweiten Bounding-Box und statistischer Information bezüglich einer Körperhaltung der Person geschätzt wird.

6. Bereichserkennungsvorrichtung, umfassend:
eine Erfassungseinheit (12), die konfiguriert ist zum Erfassen von Bildern, von denen jedes durch jede von einer Vielzahl von Bildaufnahmevorrichtungen (30n) aufgenommen wird, die die jeweiligen Bilder einer Person aus jeweiligen verschiedenen Richtungen aufnehmen, wobei die Vielzahl von Bildaufnahmevorrichtungen in derselben horizontalen Ebene angeordnet ist;
eine Detektionseinheit (14), die konfiguriert ist zum Detektieren einer Bounding-Box als einen Bereich, der die Person anzeigt, aus jedem der Bilder durch Eingeben der Bilder in ein Machine-Learning-Modell, das im Voraus durch maschinelles Lernen erzeugt wird, um den Bereich, der die Person anzeigt, zu detektieren; und
eine Interpolationseinheit (16), die konfiguriert ist zum Interpolieren, basierend auf einer ersten Bounding-Box der Person, die aus einem ersten Bild der Bilder detektiert wird, und einer Parametermatrix jeder der Vielzahl von Bildaufnahmevorrichtungen, einer zweiten Bounding-Box, die die Person in einem zweiten Bild der Bilder anzeigt, wobei das zweite Bild ein Bild ist, in dem der Bereich, der die Person anzeigt, durch das Machine-Learning-Modell nicht detektiert wird,
**dadurch gekennzeichnet, dass**
das Interpolieren umfasst:
Schätzen einer Höhe der zweiten Bounding-Box durch Umwandeln von Endpunkten einer vertikalen Mittellinie der ersten Bounding-Box in Koordinaten von Endpunkten einer vertikalen Mittellinie der Person in einem dreidimensionalen Raum basierend auf der Parametermatrix einer Bildaufnahmevorrichtung, die das erste Bild aufnimmt, und Umwandeln der Koordinaten in Koordinaten in dem zweiten Bild basierend auf der Parametermatrix einer Bildaufnahmevorrichtung, die das zweite Bild aufnimmt; und
Schätzen einer Breite der zweiten Bounding-Box basierend auf der Höhe der ersten Bounding-Box, der geschätzten Höhe der zweiten Bounding-Box und statistischer Information bezüglich einer Körperhaltung der Person, wobei die statistische Information ein Mittelwert einer Summe einer Höhe und einer Breite eines die Person umgebenden Quaders in jeder von einer Vielzahl von verschiedenen Körperhaltungen der Person ist.

7. Bereichserkennungsvorrichtung nach Anspruch 6, wobei
die Höhe der zweiten Bounding-Box geschätzt wird durch Umwandeln eines Endpunkts einer vertikalen Mittellinie der ersten Bounding-Box in eine Koordinate eines Endpunkts einer vertikalen Mittellinie der Person in einem dreidimensionalen Raum basierend auf der Parametermatrix einer Bildaufnahmevorrichtung, die das erste Bild aufnimmt, und Umwandeln der Koordinate in eine Koordinate in dem zweiten Bild basierend auf der Parametermatrix einer Bildaufnahmevorrichtung, die das zweite Bild aufnimmt.

8. Bereichserkennungsvorrichtung nach Anspruch 7, wobei
die statistische Information bezüglich der Körperhaltung der Person ein Mittelwert einer Summe einer Höhe und einer Breite eines die Person umgebenden Quaders in jeder von einer Vielzahl von verschiedenen Körperhaltungen der Person ist.

9. Bereichserkennungsvorrichtung nach Anspruch 8, wobei
eine Länge der vertikalen Mittellinie der Person in dem dreidimensionalen Raum als eine Höhe der Person in dem dreidimensionalen Raum festgelegt wird, eine Differenz zwischen dem durch die statistische Information angegebenen Mittelwert und der Höhe der Person in dem dreidimensionalen Raum als eine Breite der Person in dem dreidimensionalen Raum geschätzt wird und die Breite der zweiten Bounding-Box basierend auf einem Verhältnis der Höhe und der Breite der Person in dem dreidimensionalen Raum und der Höhe der zweiten Bounding-Box geschätzt wird.

10. Bereichserkennungsvorrichtung nach Anspruch 6, wobei
die Vielzahl von Bildaufnahmevorrichtungen in derselben vertikalen Ebene angeordnet ist, und
eine Höhe der zweiten Bounding-Box basierend auf einer Breite der ersten Bounding-Box, einer Breite der zweiten Bounding-Box und statistischer Information bezüglich einer Körperhaltung der Person geschätzt wird.

11. Bereichserkennungsverfahren zum Ausführen eines Prozesses, umfassend:
Erfassen von Bildern, von denen jedes durch jede von einer Vielzahl von Bildaufnahmevorrichtungen (30n) aufgenommen wird, die die jeweiligen Bilder einer Person aus jeweiligen verschiedenen Richtungen aufnehmen, wobei die Vielzahl von Bildaufnahmevorrichtungen in derselben horizontalen Ebene angeordnet ist;
Detektieren einer Bounding-Box als einen Bereich, der die Person anzeigt, aus jedem der Bilder durch Eingeben der Bilder in ein Machine-Learning-Modell, das im Voraus durch maschinelles Lernen erzeugt wird, um den Bereich, der die Person anzeigt, zu detektieren; und
Interpolieren, basierend auf einer ersten Bounding-Box der Person, die aus einem ersten Bild der Bilder detektiert wird, und einer Parametermatrix jeder der Vielzahl von Bildaufnahmevorrichtungen, einer zweiten Bounding-Box, die die Person in einem zweiten Bild der Bilder anzeigt, wobei das zweite Bild ein Bild ist, in dem der Bereich, der die Person anzeigt, durch das Machine-Learning-Modell nicht detektiert wird,
**dadurch gekennzeichnet, dass**
das Interpolieren umfasst:
Schätzen einer Höhe der zweiten Bounding-Box durch Umwandeln von Endpunkten einer vertikalen Mittellinie der ersten Bounding-Box in Koordinaten von Endpunkten einer vertikalen Mittellinie der Person in einem dreidimensionalen Raum basierend auf der Parametermatrix einer Bildaufnahmevorrichtung, die das erste Bild aufnimmt, und Umwandeln der Koordinaten in Koordinaten in dem zweiten Bild basierend auf der Parametermatrix einer Bildaufnahmevorrichtung, die das zweite Bild aufnimmt; und
Schätzen einer Breite der zweiten Bounding-Box basierend auf der Höhe der ersten Bounding-Box, der geschätzten Höhe der zweiten Bounding-Box und statistischer Information bezüglich einer Körperhaltung der Person, wobei die statistische Information ein Mittelwert einer Summe einer Höhe und einer Breite eines die Person umgebenden Quaders in jeder von einer Vielzahl von verschiedenen Körperhaltungen der Person ist.

## Revendications

1. Programme de détection de région destiné à amener un ordinateur à exécuter un procédé comprenant :
l'acquisition d'images, chaque image étant capturée par un appareil d'imagerie respectif d'une pluralité d'appareils d'imagerie (30n) qui capturent les images respectives d'une personne depuis des directions différentes respectives, la pluralité d'appareils d'imagerie étant disposée dans un même plan horizontal ;
la détection d'une boîte englobante en tant que région indiquant la personne à partir de chacune des images en entrant les images dans un modèle d'apprentissage automatique qui est généré à l'avance par un apprentissage automatique de manière à détecter la région indiquant la personne ; et l'interpolation, sur la base d'une première boîte englobante de la personne qui est détectée à partir d'une première image faisant partie des images et d'une matrice de paramètres de chacun des appareils d'imagerie de la pluralité, d'une deuxième boîte englobante indiquant la personne dans une deuxième image faisant partie des images, la deuxième image étant une image dans laquelle la région indiquant la personne n'est pas détectée par le modèle d'apprentissage automatique, **caractérisé en ce que**
l'interpolation comprend :
l'estimation d'une hauteur de la deuxième boîte englobante en convertissant des points d'extrémité d'une ligne centrale verticale de la première boîte englobante en coordonnées de points d'extrémité d'une ligne centrale verticale de la personne dans un espace tridimensionnel sur la base de la matrice de paramètres d'un appareil d'imagerie qui capture la première image, et en convertissant les coordonnées en coordonnées dans la deuxième image sur la base de la matrice de paramètres d'un appareil d'imagerie qui capture la deuxième image ; et
l'estimation d'une largeur de la deuxième boîte englobante sur la base de la hauteur de la première boîte englobante, de la hauteur estimée de la deuxième boîte englobante, et d'une information statistique concernant une posture de la personne, l'information statistique étant une moyenne d'une somme d'une hauteur et d'une largeur d'un parallélépipède rectangle entourant la personne dans chaque posture d'une pluralité de postures différentes de la personne.

2. Programme de détection de région selon la revendication 1,
dans lequel
la hauteur de la deuxième boîte englobante est estimée en convertissant un point d'extrémité d'une ligne centrale verticale de la première boîte englobante en une coordonnée d'un point d'extrémité d'une ligne centrale verticale de la personne dans un espace tridimensionnel sur la base de la matrice de paramètres d'un appareil d'imagerie qui capture la première image et en convertissant la coordonnée en une coordonnée dans la deuxième image sur la base de la matrice de paramètres d'un appareil d'imagerie qui capture la deuxième image.

3. Programme de détection de région selon la revendication 2,
dans lequel
l'information statistique concernant la posture de la personne est une moyenne d'une somme d'une hauteur et d'une largeur d'un parallélépipède rectangle entourant la personne dans chaque posture d'une pluralité de postures différentes de la personne.

4. Programme de détection de région selon la revendication 3,
dans lequel une longueur de la ligne centrale verticale de la personne dans l'espace tridimensionnel est définie comme une hauteur de la personne dans l'espace tridimensionnel, une différence entre la moyenne indiquée par l'information statistique et la hauteur de la personne dans l'espace tridimensionnel est estimée en tant que largeur de la personne dans l'espace tridimensionnel et la largeur de la deuxième boîte englobante est estimée sur la base d'un rapport de la hauteur et de la largeur de la personne dans l'espace tridimensionnel et de la hauteur de la deuxième boîte englobante.

5. Programme de détection de région selon la revendication 1,
dans lequel
les appareils d'imagerie de la pluralité d'appareils d'imagerie sont disposés dans un même plan vertical, et une hauteur de la deuxième boîte englobante est estimée sur la base d'une largeur de la première boîte englobante, d'une largeur de la deuxième boîte englobante, et d'une information statistique concernant une posture de la personne.

6. Dispositif de détection de région, comprenant :
une unité d'acquisition (12), configurée pour acquérir des images, chaque image étant capturée par un appareil d'imagerie respectif d'une pluralité d'appareils d'imagerie (30n) qui capturent les images respectives d'une personne depuis des directions différentes respectives, les appareils d'imagerie de la pluralité d'appareils d'imagerie étant disposés dans un même plan horizontal ;
une unité de détection (14), configurée pour détecter une boîte englobante en tant que région indiquant la personne à partir de chacune des images en entrant les images dans un modèle d'apprentissage automatique qui est généré à l'avance par un apprentissage automatique de manière à détecter la région indiquant la personne ; et
une unité d'interpolation (16), configurée pour interpoler, sur la base d'une première boîte englobante de la personne qui est détectée à partir d'une première image faisant partie des images et, pour chacun des appareils d'imagerie de la pluralité d'appareils d'imagerie, d'une matrice de paramètres, une deuxième boîte englobante indiquant la personne dans une deuxième image faisant partie des images, la deuxième image étant une image dans laquelle la région indiquant la personne n'est pas détectée par le modèle d'apprentissage automatique, **caractérisée en ce que**
l'interpolation comprend :
l'estimation d'une hauteur de la deuxième boîte englobante en convertissant des points d'extrémité d'une ligne centrale verticale de la première boîte englobante en coordonnées de points d'extrémité d'une ligne centrale verticale de la personne dans un espace tridimensionnel sur la base de la matrice de paramètres d'un appareil d'imagerie qui capture la première image, et en convertissant les coordonnées en coordonnées dans la deuxième image sur la base de la matrice de paramètres d'un appareil d'imagerie qui capture la deuxième image ; et
l'estimation d'une largeur de la deuxième boîte englobante sur la base de la hauteur de la première boîte englobante, de la hauteur estimée de la deuxième boîte englobante, et d'une information statistique concernant une posture de la personne, l'information statistique étant une moyenne d'une somme d'une hauteur et d'une largeur d'un parallélépipède rectangle entourant la personne dans chaque posture d'une pluralité de postures différentes de la personne.

7. Dispositif de détection de région selon la revendication 6, dans lequel
la hauteur de la deuxième boîte englobante est estimée en convertissant un point d'extrémité d'une ligne centrale verticale de la première boîte englobante en une coordonnée d'un point d'extrémité d'une ligne centrale verticale de la personne dans un espace tridimensionnel sur la base de la matrice de paramètres d'un appareil d'imagerie qui capture la première image et en convertissant la coordonnée en une coordonnée dans la deuxième image sur la base de la matrice de paramètres d'un appareil d'imagerie qui capture la deuxième image.

8. Dispositif de détection de région selon la revendication 7, dans lequel
l'information statistique concernant la posture de la personne est une moyenne d'une somme d'une hauteur et d'une largeur d'un parallélépipède rectangle entourant la personne dans chaque posture d'une pluralité de postures différentes de la personne.

9. Dispositif de détection de région selon la revendication 8, dans lequel une longueur de la ligne centrale verticale de la personne dans l'espace tridimensionnel est définie comme une hauteur de la personne dans l'espace tridimensionnel, une différence entre la moyenne indiquée par l'information statistique et la hauteur de la personne dans l'espace tridimensionnel est estimée en tant que largeur de la personne dans l'espace tridimensionnel et la largeur de la deuxième boîte englobante est estimée sur la base d'un rapport de la hauteur et de la largeur de la personne dans l'espace tridimensionnel et de la hauteur de la deuxième boîte englobante.

10. Dispositif de détection de région selon la revendication 6, dans lequel
les appareils d'imagerie de la pluralité d'appareils d'imagerie sont disposés dans un même plan vertical, et une hauteur de la deuxième boîte englobante est estimée sur la base d'une largeur de la première boîte englobante, d'une largeur de la deuxième boîte englobante, et d'une information statistique concernant une posture de la personne.

11. Procédé de détection de région pour mettre en œuvre un procédé comprenant :
l'acquisition d'images, chaque image étant capturée par un appareil d'imagerie respectif d'une pluralité d'appareils d'imagerie (30n) qui capturent les images respectives d'une personne depuis des directions différentes respectives, les appareils d'imagerie de la pluralité d'appareils d'imagerie étant disposés dans un même plan horizontal ;
la détection d'une boîte englobante en tant que région indiquant la personne à partir de chacune des images en entrant les images dans un modèle d'apprentissage automatique qui est généré à l'avance par un apprentissage automatique de manière à détecter la région indiquant la personne ; et
l'interpolation, sur la base d'une première boîte englobante de la personne qui est détectée à partir d'une première image faisant partie des images et, pour chacun des appareils d'imagerie de la pluralité d'appareils d'imagerie, d'une matrice de paramètres, d'une deuxième boîte englobante indiquant la personne dans une deuxième image faisant partie des images, la deuxième image étant une image dans laquelle la région indiquant la personne n'est pas détectée par le modèle d'apprentissage automatique, **caractérisée en ce que**
l'interpolation comprend :
l'estimation d'une hauteur de la deuxième boîte englobante en convertissant des points d'extrémité d'une ligne centrale verticale de la première boîte englobante en coordonnées de points d'extrémité d'une ligne centrale verticale de la personne dans un espace tridimensionnel sur la base de la matrice de paramètres d'un appareil d'imagerie qui capture la première image, et en convertissant les coordonnées en coordonnées dans la deuxième image sur la base de la matrice de paramètres d'un appareil d'imagerie qui capture la deuxième image ; et
l'estimation d'une largeur de la deuxième boîte englobante sur la base de la hauteur de la première boîte englobante, de la hauteur estimée de la deuxième boîte englobante, et d'une information statistique concernant une posture de la personne, l'information statistique étant une moyenne d'une somme d'une hauteur et d'une largeur d'un parallélépipède rectangle entourant la personne dans chaque posture d'une pluralité de postures différentes de la personne.
